# EUROPÄISCHE PATENTSCHRIFT

(11) **EP 2 948 328 B1**
(45) Veröffentlichungstag und Bekanntmachung des Hinweises auf die Patenterteilung: **14.08.2019**
(21) Anmeldenummer: 14700832.0
(22) Anmeldetag: 10.01.2014
(51) Int. Cl.: B60J 5/06, F16G 13/16

(54) **LEITUNGSFÜHRUNGSSYSTEM FÜR EIN FAHRZEUG**
LINE-GUIDING SYSTEM FOR A VEHICLE
SYSTÈME DE GUIDAGE DE LIGNES POUR UN VÉHICULE

(30) Priorität: 23.01.2013 DE 102013100660
(43) Veröffentlichungstag der Anmeldung: 02.12.2015
(73) Patentinhaber: Tsubaki Kabelschlepp GmbH, 57482 Wenden-Gerlingen (DE)
(72) Erfinder: RADEMACHER, Falk, 51647 Gummersbach (DE); WENDIG, Thomas, 57581 Katzwinkel/Elkhausen (DE); DAUB, Mark, 51580 Reichshof (DE)
(74) Vertreter: KNH Patentanwälte Neumann Heine Taruttis PartG mbB
(86) Internationale Anmeldenummer: PCT/EP2014/050347
(87) Internationale Veröffentlichungsnummer: WO 2014/114503

(56) Entgegenhaltungen:
- EP-A1- 1 378 400
- DE-U1-202004 009 795
- DE-U1-202005 019 103
- US-A1- 2006 267 380

## Beschreibung

Die vorliegende Erfindung betrifft ein Leitungsführungssystem für ein Fahrzeug zum Führen einer Leitung und insbesondere ein Leitungsführungssystem zum Führen einer Leitung, welche elektrische Komponenten in einer Schiebetür des Fahrzeugs mit dem Fahrzeug verbindet.

Es ist bekannt, dass Fahrzeuge auch mit Schiebetüren ausgestattet sind, um Insassen einen Zugang zu dem Fahrzeug zu ermöglichen. Bei Lastkraftwagen kann die Schiebetür einen Durchgang zum Laderaum bilden. Zum Öffnen der Schiebetür wird die Schiebetür im Allgemeinen in Richtung einer Außenseite des Fahrzeugs bewegt und dann entlang einer Karosserieaußenseite verschoben.

Durch die EP 1 010 558 A2 ist ein Schiebetürsystem für ein Fahrzeug, insbesondere ein Kraftfahrzeug, bekannt. Dieses Schiebetürsystem umfasst eine Schiebetür, die entlang einer Bahn bewegt wird und wenigstens eine Leitungsführungseinheit aufweist. Die Leitungsführungseinheit ist mit ihrem einen Ende mit der Schiebetür und mit ihrem anderen Ende mit einem ortsfesten Teil der Karosserie verbunden. Die Leitungsführungseinheit ist durch Glieder gebildet, die gelenkig miteinander verbunden sind. Die Leitungsführungseinheit ist so geführt, dass sie einen Obertrum und einen Untertrum aufweist, die durch einen Krümmungsbereich miteinander verbunden sind.

Durch die WO 2005/056322 ist ein Schiebetürsystem für ein Fahrzeug bekannt, welches eine Leitungsführungseinheit aufweist. Die Leitungsführungseinheit weist einen Trum, einen Krümmungsbereich und einen mit dem Krümmungsbereich verbundenen zweiten Trum auf. Die Leitungsführungseinheit ist liegend angeordnet, so dass die Trume nebeneinander liegen.

DE202005019103U1 offenbart eine Kabelführungsgruppe sowie eine Schiebetür für Kraftfahrzeuge gemäß dem Oberbegriff der Ansprüche 1, 2, 9, und 10.

Problematisch bei den bekannten Leitungsführungssystemen für ein Fahrzeug ist der relativ große Raumbedarf für die Leitungsführungseinheit. Wird die Leitungsführungseinheit liegend angeordnet, so ist zwar keine große Raumhöhe nötig, um die Leitungsführungseinheit anzuordnen. Es bedarf jedoch einer entsprechenden Tiefe in einer horizontalen Ebene, um die Leitungsführungseinheit anordnen zu können.

Hiervon ausgehend liegt der vorliegenden Erfindung die Aufgabe zugrunde, ein Leitungsführungssystem für ein Fahrzeug anzugeben, welches eines relativ geringen Raums bedarf.

Diese Aufgabe wird gelöst durch die Merkmale der Ansprüche 1, 2, 9 und 10. Vorteilhafte Weiterbildungen und Ausgestaltungen der Erfindung sind Gegenstand der abhängigen Ansprüche.

Die in den Ansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Leitungsführungssystem für ein Fahrzeug zum Führen von Leitungen, Kabeln, Schläuchen oder dergleichen weist eine Leitungsführungseinheit auf, die durch gelenkig miteinander verbundene Glieder gebildet ist. Die Leitungsführungseinheit weist ein ortsfestes Ende und ein bewegliches Ende auf. Benachbart zu wenigstens einem Ende weist die Leitungsführungseinheit einen bogenförmigen Endabschnitt auf, deren Glieder einen rückwärtigen Krümmungsradius bilden.

Durch das erfindungsgemäße Leitungsführungssystem für ein Fahrzeug wird eine Möglichkeit beschrieben, eine Leitungsführungseinheit bspw. zum Bestromen der Schiebetür zu verwenden, die einen geringen Einbauraum benötigt. Dadurch, dass die Leitungsführungseinheit im Wesentlichen im gestreckten Zustand an einem Ende einen bogenförmigen Endabschnitt aufweist, können Einbautoleranzen und Fertigungstoleranzen am Fahrzeug kompensiert werden. In Abhängigkeit von der Position der Schiebetür zur Karosserie im geschlossenen Zustand der Schiebetür kann es zu Zug- oder Druckbelastungen der Leitungsführungseinheit kommen. Durch den bogenförmigen Abschnitt der Leitungsführungseinheit werden die Belastungen der Leitungsführungseinheit wesentlich verringert, da durch diesen, den bogenförmigen Abschnitt, Toleranzen ausgeglichen werden können.

Nach einem weiteren erfindungsgemäßen Gedanken wird ein Leitungsführungssystem für ein Fahrzeug zum Führen von Leitungen, Kabeln, Schläuchen oder dergleichen einer Leitung sführungseinheit, die gelenkig miteinander verbundene Glieder gebildet ist, vorgeschlagen. Die Leitungsführungseinheit weist ein ortsfestes Ende und ein bewegliches Ende auf. Im geschlossenen Zustand einer Schiebetür eines Fahrzeugs ist die Leitungsführungseinheit im Wesentlichen gestreckt. Benachbart zu wenigstens einem Ende der Leitungsführungseinheit ist ein bogenförmiger Endabschnitt vorgesehen. Der bogenförmige Endabschnitt ist über ein Zwischenglied mit der Leitungsführungseinheit verbunden. Die Glieder der Leitungsführungseinheit sind um erste Achsen und die Glieder des wenigstens einen bogenförmigen Abschnitts um zweite Achsen verschwenkbar. Die ersten und die zweiten Achsen schneiden sich unter einem Winkel von im Wesentlichen 90°.

Durch diese erfindungsgemäße Ausgestaltung des Leitungsführungssystems wird auch eine Kompensation von möglichen Einbau- und/oder Fertigungstoleranzen erreicht. Während des Öffnungsvorgangs der Schiebetür bildet sich ein Umlenkbereich aus, der zwei Trume der Leitungsführungseinheit verbindet. Der Krümmungsradius des Umlenkbereichs wird durch die konstruktive Ausgestaltung der Glieder bestimmt. Ein rückwärtiger Krümmungsradius im bogenförmigen Endabschnitt kann auch dadurch erzielt werde, dass die Leitungsführungseinheit aus gleichen Gliedern gebildet ist, wobei die Glieder im bogenförmigen Endabschnitt verdreht montiert sind.

Nach einer weiteren vorteilhaften Ausgestaltung des erfindungsgemäßen Leitungsführungssystems wird benachbart zum Endabschnitt ein Begrenzungselement vorgesehen. Durch das Begrenzungselement wird der bogenförmige Abschnitt in seine Form gezwungen. Der andere Abschnitt der Leitungsführungseinheit ist im Wesentlichen gestreckt im geschlossenen Zustand der Schiebetür.

Besonders bevorzugt ist eine Ausgestaltung des Leitungsführungssystems, bei dem die Leitungsführungseinheit in einer im Wesentlichen U-förmigen Schiene angeordnet ist. Besonders bevorzugt ist eine Ausgestaltung, bei der das Begrenzungselement ein die gegenüberliegenden Schenkel der Schienen verbindender Steg ist.

Zur Vereinfachung der Montage der Leitungsführungseinheit in der Schiebetür oder in der Karosserie wird vorgeschlagen, dass die Schiene und die Leitungseinheit eine Baueinheit bilden.

Die Schiene kann vorzugsweise aus einem Kunststoff hergestellt sein.

Gemäß einem weiteren erfinderischen Gedanken wird ein Fahrzeug mit einer Karosserie, einer Schiebetür und einem Leitungsführungssystem vorgeschlagen. Das Leitungsführungssystem ist mit der Karosserie und der Schiebetür verbunden. Es dient zum Führen von Leitungen, Kabeln, Schläuchen oder dergleichen. Das Leitungsführungssystem weist eine Leitung sführungseinheit auf, die durch gelenkig miteinander verbundene Glieder gebildet ist, wobei die Leitungsführungseinheit ein ortsfestes Ende und ein bewegliches Ende aufweist. Die Leitungsführungseinheit ist so ausgebildet, dass im geschlossenen Zustand der Schiebetür diese im Wesentlichen gestreckt ist und die Leitungsführungseinheit einen an einem Ende benachbarten bogenförmigen Abschnitt hat, dessen Glieder einen rückwärtigen Krümmungsradius aufweisen.

Nach einem noch weiteren erfinderischen Gedanken wird ein Fahrzeug mit einer Karosserie, einer Schiebetür und einem Leitungsführungssystem vorgeschlagen. Das Leitungsführungssystem weist zum Führen von Kabel, Leitungen, Schläuchen oder dergleichen eine Leitungsführungseinheit auf, die durch gelenkig miteinander verbundene Glieder gebildet ist. Die Leitungsführungseinheit hat ein ortsfestes Ende und ein bewegliches Ende. Die Leitungsführungseinheit ist in geschlossenem Zustand einer Schiebetür im Wesentlichen gestreckt. An wenigstens einem Ende der Leitungsführungseinheit ist ein bogenförmiger Endabschnitt vorgesehen, der über ein Zwischenglied mit der Leitungsführungseinheit verbunden ist. Die Glieder der Leitungsführungseinheit sind um erste Achsen und die Glieder des wenigstens einen bogenförmigen Endabschnitts um zweite Achsen verschwenkbar, wobei sich die ersten und die zweiten Achsen unter einem Winkel von im Wesentlichen 90° schneiden.

Bevorzugt ist dabei eine Ausgestaltung des Leitungsführungssystems nach den Patentansprüchen 2 bis 8.

Insbesondere ist das Leitungsführungssystem so ausgebildet, dass es eine Schiene aufweist, in der die Leitungsführungseinheit geführt wird und die Schiene in der Schiebetür eingebaut ist.

Weitere Vorteile und Einzelheiten der Erfindung werden anhand der in den Zeichnungen dargestellten Ausführungsbeispiele erläutert. Es zeigen:
Fig. 1a bis 1c eine Leitungsführungseinheit und die Kompensation von Fertigungstoleranzen,
Fig. 2 schematisch den Bewegungsablauf der Leitungsführungseinheit,
Fig. 3: ein zweites Ausführungsbeispiel eines Leitungsführungssystems,
Fig. 4a-4c: Momentaufnahmen des dritten Ausführungsbeispiels eines Leitungsführungssystems, und
Fig. 5: ein Zwischenglied in einer perspektivischen Ansicht.

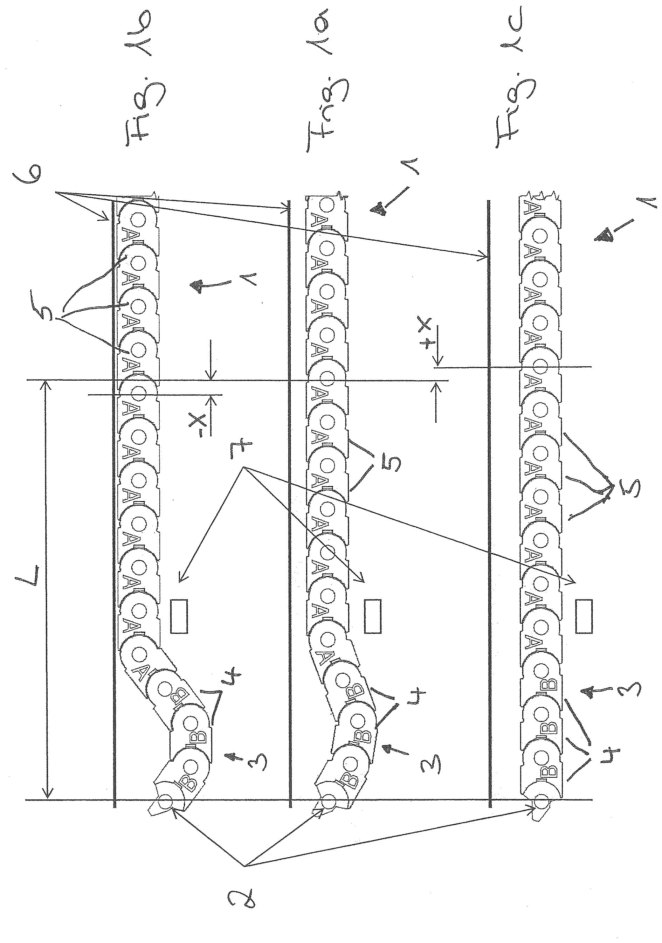

In den Fig. 1a, 1b und 1c ist schematisch eine Leitungsführungseinheit 1 dargestellt. Die Leitungsführungseinheit 1 ist durch gelenkig miteinander verbundene Glieder gebildet. Mit dem Bezugszeichen 2 ist ein bewegliches Ende der Leitungsführungseinheit 1 bezeichnet. Das bewegliche Ende der Leitungsführungseinheit ist mit einer nicht dargestellten Schiebetür verbunden. Benachbart zu dem beweglichen Ende 2 ist ein bogenförmiger Endabschnitt 3 vorgesehen, der durch Kettenglieder 4 gebildet ist. Die Kettenglieder 4 sind so angeordnet, dass diese einen rückwärtigen Krümmungsradius aufweisen. Der Krümmungsradius eines Umlenkbereichs wird durch die konstruktive Ausgestaltung der Glieder bestimmt. Ein rückwärtiger Krümmungsradius im bogenförmigen Endabschnitt kann auch dadurch erzielt werde, dass die Leitungsführungseinheit aus gleichen Gliedern gebildet ist, wobei die Glieder im bogenförmigen Endabschnitt verdreht montiert sind. Zu Verdeutlichung der Montagerichtung wurde in Fig.1 a -c jeweils eine Seite ein und derselben Gliedbauart mit "A" bzw. "B" gekennzeichnet.

An dem bogenförmigen Abschnitt 3, wie er in Fig. la bzw. 1b dargestellt ist, schleißen sich Glieder 5 an, die gelenkig miteinander verbunden sind. Die Glieder weisen einen Krümmungsradius auf, so dass im ausgelenkten Zustand der Glieder 5 ein Bogen gebildet wird, dessen Krümmung umgekehrt zum Bogen des Abschnitts 3 ist.

In den Fig. 1a-1c ist dargestellt, dass die Leitungsführungseinheit liegend angeordnet ist, das heißt die Glieder, die durch parallel gebildete Laschen und diese verbindende Querstegen gebildet ist, so angeordnet ist, dass die Laschen der einen Seite der Glieder auf der Auflage liegen und die Leitungsführungseinheit 1 in der Zeichnungsebene bewegbar ist.

Die Leitungsführungseinheit ist in einer U-förmigen Schiene angeordnet, so dass die Leitungsführungseinheit durch die drei Seiten der U-förmigen Schiene begrenzt wird. In der Darstellung nach Fig. 1a-1c ist die Basis der U-förmigen Schiene 6 dargestellt. Mit den gegenüberliegenden Schenkel der U-förmigen Schiene 6 ist ein Begrenzungselement 7 verbunden. Das Begrenzungselement 7 ist benachbart zu dem bogenförmigen Endabschnitt 3 vorgesehen.

In der Fig. 1a ist die Leitungsführungseinheit 1 dargestellt, wie sie bei einer "toleranzfreien" Einbausituation der Schiebetür im Fahrzeug vorliegt. Mit L ist ein Abstand zwischen dem beweglichen Ende 2 und einem Glied 5 eingezeichnet, um die Funktionalität der Erfindung zu verdeutlichen. Das Glied 5 ist hierbei willkürlich gewählt. Aus Fig. 1a ist ersichtlich, dass der bogenförmige Abschnitt 3 einen vorgegebenen rückwärtigen Krümmungsradius einnimmt.

Aufgrund von Einbautoleranzen und/oder Fertigungstoleranzen der Schiebetür und/oder der Karosserie kann im Wesentlichen zwischen zwei Einbausituationen unterschieden werden. Fig. 1b zeigt eine Einbausituation, in der der Abstand zwischen dem beweglichen Ende 2 und dem nicht dargestellten ortsfesten Ende kleiner ist als der bei einem ordnungsgemäßen Einbau nach Fig. 1a. Dies führt zu einer Verschiebung um die Wegstrecke -X, wie sie in Fig. 1b dargestellt ist. Die Verschiebung wird durch den bogenförmigen Endabschnitt 3 kompensiert. Ein Vergleich des bogenförmigen Abschnitts 3 zwischen den Fig. 1a und 1b zeigt, dass die Glieder 4 relativ zueinander stärker ausgelenkt sind. Durch den bogenförmigen Endabschnitt wird die Einbautoleranz kompensiert, so dass in die Leitungsführungseinheit im Wesentlichen keine Druckkräfte eingeleitet werden.

Führt die Einbausituation im Fahrzeug dazu, dass das bewegliche Ende 2 gegenüber der ordnungsgemäßen Einbausituation um den Weg +X, wie in Fig. 1c vergrößert ist, so wird der bogenförmigen Endabschnitt 3 flacher bis zur gestreckten Position des bogenförmigen Abschnitts 3. In dieser Einbausituation werden Zugkräfte kompensiert.

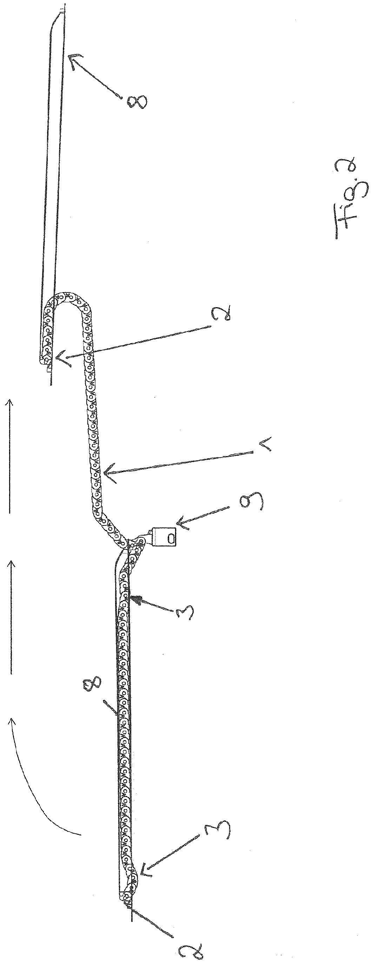

Fig. 2 zeigt schematisch ein Leitungsführungssystem für ein Fahrzeug. Das Leitungsführungssystem umfasst eine Leitungsführungseinheit 1, die durch gelenkig miteinander verbundene Glieder gebildet ist. Die Leitungsführungseinheit 1 ist in einer U-förmigen Schiene 8 angeordnet. Die Leitungsführungseinheit 1 und die Schiene 8 bilden eine Baueinheit. Das bewegliche Ende 2 der Leitungsführungseinheit 1 ist mit der Schiene 8 verbunden. Das andere Ende der Leitungsführungseinheit ist als ortsfestes Ende 9 mit einer Karosserie eines Fahrzeugs, welches nicht dargestellt ist, verbunden. Die Schiene 8 ist in einer nicht dargestellten Schiebetür angeordnet. Die Leitungsführungseinheit 1 ist liegend angeordnet, das heißt, sie bewegt sich in der Ebene der Zeichnung.

Fig. 2 zeigt zwei Positionen der Leitungsführungseinheit. In der links vom ortsfesten Ende 9 dargestellten Anordnung ist die Schiebetür geschlossen. Es ist ein bogenförmiger Endabschnitt 3 ausgebildet, der mögliche Fertigungstoleranzen bezüglich der Einbausituation kompensiert. Mit den Pfeilen, wie sie in Fig. 2 dargestellt sind, wird der Bewegungsablauf der Schiebetür bezeichnet. Im geöffneten Zustand der Schiebetür hat die Leitungsführungseinheit 1 die Schiene 8 verlassen, wie dies rechts vom ortsfesten Ende 9 dargestellt ist.

Aus Fig. 2 ist ersichtlich, dass die Leitungsführungseinheit im geschlossenen Zustand der Schiebetür benachbart zu dem beweglichen Ende 2 und zu dem ortsfesten Ende 9 jeweils einen bogenförmigen Abschnitt 3 aufweist, so dass noch größere Einbautoleranzen kompensiert werden können.

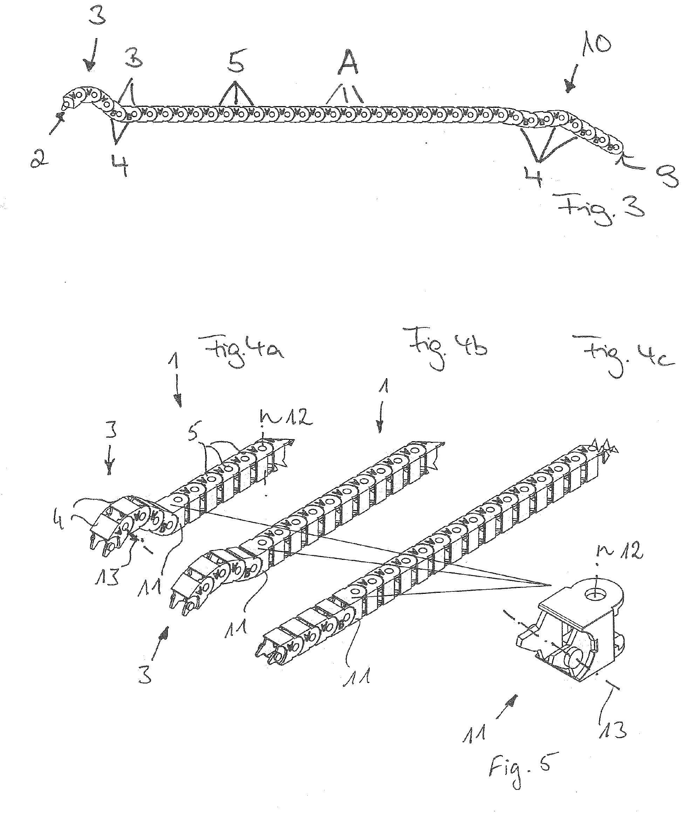

In Fig. 3 ist ein zweites Ausführungsbeispiel eines Leitungsführungssystems für ein Fahrzeug zum Führen von Leitungen, Kabeln, Schläuchen oder dergleichen dargestellt. Die Leitungsführungseinheit 1 ist gebildet durch gelenkig miteinander verbundene Glieder 5. Die Leitungsführungseinheit 1 weist ein ortsfestes Ende 9 und ein bewegliches Ende 2 auf. Fig. 3 zeigt, dass die Leitungsführungseinheit 1 zwei bogenförmige Endabschnitte 3, 10 aufweist. Der bogenförmige Endabschnitt 10 ist im Wesentlichen S-förmig ausgebildet. Der Endabschnitt 10 ist gebildet durch im Wesentlichen gleiche Glieder, die um 180° gedreht angeordnet sind. Die Leitungsführungseinheit ist durch die Glieder 5 gebildet. Die gleichen Glieder werden für die Ausgestaltung der bogenförmigen Endabschnitte 3 verwendet. Der bogenförmige Endabschnitt 3 beginnt mit zwei Gliedern, die die gleichen wie die der Leitungsführungseinheit 1 sind, wobei diese um 180° gedreht montiert sind. Zur Verdeutlichung sind die Glieder 5 der Leitungsführungseinheit 1 mit dem Buchstaben A versehen. Die um 180° gedreht montierten Glieder 4 weisen den Buchstaben B auf.

Aus der Darstellung nach Fig. 3 ist ersichtlich, dass die ersten beiden Glieder 4 des bogenförmigen Endabschnitts 3 mit dem Buchstaben B versehen sind, was zum Ausdruck bringt, dass diese um 180° gedreht sind. An diese Glieder folgen drei Glieder, die wiederum gegenüber den beiden vorhergehenden Gliedern um 180° gedreht sind und somit wieder den Buchstaben A aufweisen. Die Anzahl der Glieder im bogenförmigen Abschnitt 3 kann sowohl hinsichtlich der um 180° gedrehten Glieder als auch der anderen Glieder unterschiedlich sein.

Der bogenförmige Endabschnitt 10 weist zwei Glieder 4 auf, die um 180° gedreht sind. Die zwei weiteren Glieder sind wiederum um 180° gedreht, und es schließen sich drei Glieder an, die gleichfalls um 180° gedreht sind, so dass eine Abfolge B-B-A-A-B-B-B erzeugt sind. Diese Abfolge führt zu einer im Wesentlichen S-förmigen Ausgestaltung des bogenförmigen Endabschnitts 10. Die Anzahl und die Montagerichtung der Glieder 4 im bogenförmigen Endabschnitt 10 kann entsprechend den Bedürfnissen angepasst werden.

In den Fig. 4a-4c ist ein Leitungsführungssystem schematisch dargestellt. Das Leitungsführungssystem weist eine Leitungsführungseinheit 1 auf, die durch Glieder 5, die gelenkig miteinander verbunden sind, gebildet sind. Die Glieder 5 sind jeweils um eine erste Achse 12 auslenkbar. Die Leitungsführungseinheit 1 ist liegend angeordnet. Sie weist einen bogenförmigen Endabschnitt 3 auf, der durch Glieder 4 gebildet ist. Der bogenförmige Endabschnitt 3 ist mit der Leitungsführungseinheit 1 durch ein Zwischenglied 11 verbunden.

Die Glieder 4 des bogenförmigen Endabschnitts 3 sind gelenkig um jeweils eine zweite Achse 13 miteinander verbunden. Die Achsen 12, 13 schneiden sich unter einem Winkel von im Wesentlichen 90°.

Das Zwischenglied 11, wie es in der Fig. 5 dargestellt ist, weist zu einem Glied 5 der Leitungsführungseinheit 1 und einem Glied 4 des bogenförmigen Endabschnitts 3 korrespondierend ausgebildete Gelenkelemente auf, so dass zwei Achsen 12, 13 am Zwischenglied 11 ausgebildet sind.

Durch die Darstellung in den Fig. 4a, 4b und 4c soll verdeutlicht werden, dass durch das Leitungsführungssystem unterschiedliche Einbau- und/oder Fertigungstoleranzen kompensiert werden können. Der bogenförmige Abschnitt 3 kann zum Längenausgleich in einen gestreckten Zustand überführt werden.

Durch die erfindungsgemäße Ausgestaltung des Leitungsführungssystems wird ein Bruch der Leitungsführungseinheit durch Druck oder Druckkräfte verringert. Im geschlossenen Zustand der Schiebetür wird auch der Einbauraum für die Leitungsführungseinheit relativ gering.

### Bezugszeichenliste

- 1: Leitung sführungseinheit
- 2: bewegliches Ende
- 3: bogenförmiger Endabschnitt
- 4: Glieder
- 5: Glieder
- 6: Schiene
- 7: Begrenzungselement
- 8: U-förmige Schiene
- 9: ortsfestes Ende
- 10: bogenförmiger Endabschnitt
- 11: Zwischenglied
- 12: Erste Achse
- 13: Zweite Achse

## Patentansprüche

1. Leitungsführungssystem für ein Fahrzeug, wobei das Leitungsführungssystem eine Leitungsführungseinheit (1) zum Führen von Leitungen, Kabeln, Schläuchen oder dergleichen in der Leitungsführungseinheit (1), die durch gelenkig miteinander verbundene Glieder (5) gebildet ist, aufweist, wobei die Leitungsführungseinheit (1) ein ortsfestes Ende (9) und ein bewegliches Ende (2) aufweist, wobei die Leitungsführungseinheit (1) einen ersten Trum, einen Krümmungsbereich mit einem Krümmungsradius und einen zweiten Trum, die durch die Glieder (1) gebildet sind, aufweist, wobei die Leitungsführungseinheit (1) im geschlossenem Zustand einer Schiebetür des Fahrzeugs gestreckt ist und die Leitungsführungseinheit (1) an wenigstens einem Ende (2, 9) einen benachbarten bogenförmigen Endabschnitt (3, 10) hat, deren Glieder (5) einen rückwärtigen Krümmungsradius aufweisen, **dadurch gekennzeichnet, dass** die Glieder im bogenförmigen Endabschnitt (3, 10) verdreht montiert sind, so dass im ausgelenkten Zustand der Glieder ein Bogen gebildet wird, dessen Krümmung umgekehrt zum Bogen des Abschnitts ist.

2. Leitungsführungssystem für ein Fahrzeug, , wobei das Leitungsführungssystem eine Leitungsführungseinheit (1) zum Führen von Leitungen, Kabeln, Schläuchen oder dergleichen in der Leitungsführungseinheit (1), die durch gelenkig miteinander verbundene Glieder (5) gebildet ist, aufweist, wobei die Leitungsführungseinheit (1) ein ortsfestes Ende (9) und ein bewegliches Ende (2) aufweist, wobei die Leitungsführungseinheit (1) einen ersten Trum, einen Krümmungsbereich mit einem Krümmungsradius und einen zweiten Trum, die durch die Glieder (1) gebildet sind, aufweist, wobei die Leitungsführungseinheit (1) im geschlossenem Zustand einer Schiebetür des Fahrzeugs gestreckt ist und die Leitungsführungseinheit (1) an wenigstens einem Ende (2, 9) einen benachbarten bogenförmigen Endabschnitt (3) hat, der über ein Zwischenglied (11) mit der Leitungsführungseinheit (1) verbunden ist, wobei die Glieder (5) der Leitungsführungseinheit (1) um erste Achsen (12) und die Glieder (5) des wenigstens einen bogenförmigen Endabschnitts (3) um zweite Achsen (13) verschwenkbar sind, wobei sich die ersten und die zweiten Achsen (12, 13) unter einem Winkel von im Wesentlichen 90° schneiden, **dadurch gekennzeichnet, dass** die Glieder im bogenförmigen Endabschnitt (3, 10) verdreht montiert sind, so dass im ausgelenkten Zustand der Glieder ein Bogen gebildet wird, dessen Krümmung umgekehrt zum Bogen des Abschnitts ist.

3. Leitungsführungssystem nach Anspruch 1 oder 2, **dadurch gekennzeichnet, dass** benachbart zum Endabschnitt (3) ein Begrenzungselement (7) vorgesehen ist.

4. Leitungsführungssystem nach Anspruch 1, 2 oder 3, **dadurch gekennzeichnet, dass** die Leitungsführungseinheit (1) in einer U-förmigen Schiene (8) angeordnet ist.

5. Leitungsführungssystem nach Anspruch 4, **dadurch gekennzeichnet, dass** das Begrenzungselement (7) ein die gegenüberliegenden Schenkel der Schiene (8) verbindender Steg ist.

6. Leitungsführungssystem nach Anspruch 4 oder 5, **dadurch gekennzeichnet, dass** die Schiene (8) und die Leitungsführungseinheit (1) eine Baueinheit bilden.

7. Leitungsführungssystem nach Anspruch 4, 5 oder 6, **dadurch gekennzeichnet, dass** die Schiene (8) aus einem Kunststoff hergestellt ist.

8. Leitungsführungssystem nach einem der Ansprüche 1 bis 7, **dadurch gekennzeichnet, dass** die Leitungsführungseinheit (1) und der bogenförmiger Abschnitt aus gleichen Gliedern (4, 5) gebildet ist.

9. Fahrzeug mit einer Karosserie, einer Schiebetür und einem Leitungsführungssystem mit einer Leitungsführungseinheit (1), die mit der Karosserie und der Schiebetür verbunden ist, zum Führen von Leitungen, Kabeln, Schläuchen oder dergleichen in der Leitungsführungseinheit (1), die durch gelenkig miteinander verbundene Glieder (5) gebildet ist, wobei die Leitungsführungseinheit (1) ein ortsfestes Ende (9) und ein bewegliches Ende (8) aufweist, wobei die Leitungsführungseinheit (1) im geschlossenem Zustand der Schiebetür im Wesentlichen gestreckt ist und die Leitungsführungseinheit (1) einen einem Ende (8, 9) benachbarten bogenförmigen Endabschnitt (3) hat, deren Glieder (4) einen rückwärtigen Krümmungsradius aufweisen, **dadurch gekennzeichnet, dass** die Glieder im bogenförmigen Endabschnitt (3, 10) verdreht montiert sind, so dass im ausgelenkten Zustand der Glieder ein Bogen gebildet wird, dessen Krümmung umgekehrt zum Bogen des Abschnitts ist.

10. Fahrzeug mit einer Karosserie, einer Schiebetür und einem Leitungsführungssystem mit einer Leitungsführungseinheit (1), die mit der Karosserie und der Schiebetür verbunden ist, zum Führen von Leitungen, Kabeln, Schläuchen oder dergleichen in der Leitungsführungseinheit (1), die durch gelenkig miteinander verbundene Glieder (5) gebildet ist, wobei die Leitungsführungseinheit (1) ein ortsfestes Ende (9) und ein bewegliches Ende (2) aufweist, wobei die Leitungsführungseinheit (1) im geschlossenem Zustand der Schiebetür im Wesentlichen gestreckt ist und die Leitungsführungseinheit (1) an wenigstens einem Ende (9, 2) einen benachbarten bogenförmigen Endabschnitt (3) hat, der über ein Zwischenglied (11) mit der Leitungsführungseinheit (1) verbunden ist, wobei die Glieder (4) der Leitungsführungseinheit (1) um erste Achsen (12) und die Glieder (5) des wenigstens einen bogenförmigen Endabschnitts (3) um zweite Achsen (13) verschwenkbar sind, wobei sich die ersten und die zweiten Achsen (12, 13) unter einem Winkel von im Wesentlichen 90° schneiden, **dadurch gekennzeichnet, dass** die Glieder im bogenförmigen Endabschnitt (3, 10) verdreht montiert sind, so dass im ausgelenkten Zustand der Glieder ein Bogen gebildet wird, dessen Krümmung umgekehrt zum Bogen des Abschnitts ist.

11. Fahrzeug nach Anspruch 9 oder 10, **dadurch gekennzeichnet, dass** das Leitungsführungssystem nach einem der Ansprüche 2 bis 8 ausgebildet ist.

12. Fahrzeug nach Anspruch 11, **dadurch gekennzeichnet, dass** die Schiene (8) mit der Schiebetür verbunden ist.

## Claims

1. Line-guiding system for a vehicle, the line-guiding system having a line-guiding unit (1) for guiding lines, cables, hoses or the like in the line-guiding unit (1), which is formed by links (5) connected to one another in an articulated manner, the line-guiding unit (1) having a stationary end (9) and a movable end (2), the line-guiding unit (1) having a first run, a curved region with a radius of curvature and a second run, which are formed by the links (1), the line-guiding unit (1) being stretched in the closed state of a sliding door of the vehicle, and the line-guiding unit (1) having at at least one end (2, 9) an adjacent arcuate end section (3, 10), the links (5) of which have a rearward radius of curvature,
**characterized in that** the links in the arcuate end section (3, 10) are mounted so as to be rotated, so that in the deflected state of the links, a curve is formed, the curvature of which is the reverse of the curve of the section.

2. Line-guiding system for a vehicle, the line-guiding system having a line-guiding unit (1) for guiding lines, cables, hoses or the like in the line-guiding unit (1), which is formed by links (5) connected to one another in an articulated manner, the line-guiding unit (1) having a stationary end (9) and a movable end (2), the line-guiding unit (1) having a first run, a curved region with a radius of curvature and a second run, which are formed by the links (1), the line-guiding unit (1) being stretched in the closed state of a sliding door of the vehicle, and the line-guiding unit (1) having at at least one end (2, 9) an adjacent arcuate end section (3), which is connected to the line-guiding unit (1) via an intermediate link (11), the links (5) of the line-guiding unit (1) being pivotable about first axes (12), and the links (5) of the at least one arcuate end section (3) being pivotable about second axes (13), the first and the second axes (12, 13) intersecting at an angle of substantially 90°,
**characterized in that** the links in the arcuate end section (3, 10) are mounted so as to be rotated, so that in the deflected state of the links, a curve is formed, the curvature of which is the reverse of the curve of the section.

3. Line-guiding system according to Claim 1 or 2, **characterized in that** a limiting element (7) is provided adjacent to the end section (3).

4. Line-guiding system according to Claim 1, 2 or 3, **characterized in that** the line-guiding unit (1) is arranged in a U-shaped rail (8).

5. Line-guiding system according to Claim 4, **characterized in that** the limiting element (7) is a web connecting the opposite legs of the rail (8).

6. Line-guiding system according to Claim 4 or 5, **characterized in that** the rail (8) and the line-guiding unit (1) form one structural unit.

7. Line-guiding system according to Claim 4, 5 or 6, **characterized in that** the rail (8) is produced from a plastic.

8. Line-guiding system according to one of Claims 1 to 7, **characterized in that** the line-guiding unit (1) and the arcuate section are formed from the same links (4, 5).

9. Vehicle having a body, a sliding door and a line-guiding system with a line-guiding unit (1), which is connected to the body and the sliding door, for guiding lines, cables, hoses or the like in the line-guiding unit (1), which is formed by links (5) connected to one another in an articulated manner, the line-guiding unit (1) having a stationary end (9) and a movable end (8), the line-guiding unit (1) being substantially stretched in the closed state of the sliding door, and the line-guiding unit (1) having an arcuate end section (3) adjacent to one end (8, 9), the links (4) of which have a reverse radius of curvature,
**characterized in that** the links in the arcuate end section (3, 10) are mounted so as to be rotated, so that in the deflected state of the links, a curve is formed, the curvature of which is the reverse of the curve of the section.

10. Vehicle having a body, a sliding door and a line-guiding system with a line-guiding unit (1), which is connected to the body and the sliding door, for guiding lines, cables, hoses or the like in the line-guiding unit (1), which is formed by links (5) connected to one another in an articulated manner, the line-guiding unit (1) having a stationary end (9) and a movable end (2), the line-guiding unit (1) being substantially stretched in the closed state of the sliding door, and the line-guiding unit (1) having an adjacent arcuate end section (3) at at least one end (9, 2), which is connected to the line-guiding unit (1) via an intermediate link (11), the links (4) of the line-guiding unit (1) being pivotable about first axes (12), and the links (5) of the at least one arcuate end section (3) being pivotable about second axes (13), the first and the second axes (12, 13) intersecting at an angle of substantially 90°,
**characterized in that** the links in the arcuate end section (3, 10) are mounted so as to be rotated, so that in the deflected state of the links, a curve is formed, the curvature of which is the reverse of the curve of the section.

11. Vehicle according to Claim 9 or 10, **characterized in that** the line-guiding system is formed according to one of Claims 2 to 8.

12. Vehicle according to Claim 11, **characterized in that** the rail (8) is connected to the sliding door.

## Revendications

1. Système de guidage de lignes pour un véhicule, le système de guidage de lignes présentant une unité de guidage de lignes (1) pour guider des lignes, des câbles, des tuyaux ou similaires dans l'unité de guidage de lignes (1), qui est formée par des maillons (5) connectés les uns aux autres de manière articulée, l'unité de guidage de lignes (1) présentant une extrémité fixe (9) et une extrémité mobile (2), l'unité de guidage de lignes (1) présentant un premier tronçon, une région de courbure avec un rayon de courbure et un deuxième tronçon, lesquels sont formés par les maillons (1), l'unité de guidage de lignes (1) étant étirée dans l'état fermé d'une porte coulissante du véhicule et l'unité de guidage de lignes (1) présentant, au niveau d'au moins une extrémité (2, 9), une portion d'extrémité (3, 10) adjacente de forme courbe, dont les maillons (5) présentent un rayon de courbure vers l'arrière,
**caractérisé en ce que**
les maillons sont montés de manière tournée dans la portion d'extrémité (3, 10) de forme courbe, de telle sorte que dans l'état dévié des maillons, un arc soit formé, dont la courbure est inverse de celle de l'arc de la portion.

2. Système de guidage de lignes pour un véhicule, le système de guidage de lignes présentant une unité de guidage de lignes (1) pour guider des lignes, des câbles, des tuyaux ou similaires dans l'unité de guidage de ligne (1), qui est formée par des maillons (5) connectés les uns aux autres de manière articulée, l'unité de guidage de lignes (1) présentant une extrémité fixe (9) et une extrémité mobile (2), l'unité de guidage de lignes (1) présentant un premier tronçon, une région de courbure avec un rayon de courbure et un deuxième tronçon, lesquels sont formés par les maillons (1), l'unité de guidage de lignes (1) étant étirée dans l'état fermé d'une porte coulissante du véhicule et l'unité de guidage de lignes (1) présentant, au niveau d'au moins une extrémité (2, 9), une portion d'extrémité (3) adjacente de forme courbe qui est connectée à l'unité de guidage de lignes (1) par le biais d'un maillon intermédiaire (11), les maillons (5) de l'unité de guidage de lignes (1) pouvant pivoter autour de premiers axes (12) et les maillons (5) de l'au moins une portion d'extrémité (3) de forme courbe pouvant pivoter autour de deuxièmes axes (13), les premiers et les deuxièmes axes (12, 13) se coupant suivant un angle de sensiblement 90°,
**caractérisé en ce que**
les maillons sont montés de manière tournée dans la portion d'extrémité (3, 10) de forme courbe de telle sorte que dans l'état dévié des maillons, un arc soit formé, dont la courbure est inverse de celle de l'arc de la portion.

3. Système de guidage de lignes selon la revendication 1 ou 2, **caractérisé en ce qu'**un élément de limitation (7) est prévu à côté de la portion d'extrémité (3).

4. Système de guidage de lignes selon la revendication 1, 2 ou 3, **caractérisé en ce que** l'unité de guidage de lignes (1) est disposée dans un rail en forme de U (8).

5. Système de guidage de lignes selon la revendication 4, **caractérisé en ce que** l'élément de limitation (7) est une âme reliant les branches opposées du rail (8).

6. Système de guidage de lignes selon la revendication 4 ou 5, **caractérisé en ce que** le rail (8) et l'unité de guidage de lignes (1) forment une unité constructive.

7. Système de guidage de lignes selon la revendication 4, 5 ou 6, **caractérisé en ce que** le rail (8) est fabriqué en plastique.

8. Système de guidage de lignes selon l'une quelconque des revendications 1 à 7, **caractérisé en ce que** l'unité de guidage de lignes (1) et la portion de forme courbe sont formées à partir des mêmes maillons (4, 5).

9. Véhicule comprenant une carrosserie, une porte coulissante et un système de guidage de lignes avec une unité de guidage de lignes (1) qui est connectée à la carrosserie et à la porte coulissante, pour guider des lignes, des câbles, des tuyaux ou similaires dans l'unité de guidage de lignes (1), qui est formée par des maillons (5) connectés les uns aux autres de manière articulée, l'unité de guidage de lignes (1) présentant une extrémité fixe (9) et une extrémité mobile (8), l'unité de guidage de lignes (1) étant essentiellement étirée dans l'état fermé de la porte coulissante et l'unité de guidage de lignes (1) présentant une portion d'extrémité (3) de forme courbe adjacente à une extrémité (8, 9), dont les maillons (4) présentent un rayon de courbure vers l'arrière, **caractérisé en ce que** les maillons sont montés de manière tournée dans la portion d'extrémité (3, 10) de forme courbe, de telle sorte que dans l'état dévié des maillons, un arc soit formé, dont la courbure est inverse de celle de l'arc de la portion.

10. Véhicule comprenant une carrosserie, une porte coulissante et un système de guidage de lignes avec une unité de guidage de lignes (1) qui est connectée à la carrosserie et à la porte coulissante, pour guider des lignes, des câbles, des tuyaux ou similaires dans l'unité de guidage de lignes (1), qui est formée par des maillons (5) connectés les uns aux autres de manière articulée, l'unité de guidage de lignes (1) présentant une extrémité fixe (9) et une extrémité mobile (2), l'unité de guidage de lignes (1) étant essentiellement étirée dans l'état fermé de la porte coulissante et l'unité de guidage de lignes (1) présentant, au niveau d'au moins une extrémité (9, 2), une portion d'extrémité (3) adjacente de forme courbe qui est connectée à l'unité de guidage de lignes (1) par le biais d'un maillon intermédiaire (11), les maillons (4) de l'unité de guidage de lignes (1) pouvant pivoter autour de premiers axes (12) et les maillons (5) de l'au moins une portion d'extrémité (3) de forme courbe pouvant pivoter autour de deuxièmes axes (13), les premiers et deuxièmes axes (12, 13) se coupant suivant un angle de sensiblement 90°, **caractérisé en ce que** les maillons sont montés de manière tournée dans la portion d'extrémité (3, 10) de forme courbe, de telle sorte que dans l'état dévié des maillons, un arc soit formé, dont la courbure est inverse de celle de l'arc de la portion.

11. Véhicule selon la revendication 9 ou 10, **caractérisé en ce que** le système de guidage de lignes est réalisé selon l'une quelconque des revendications 2 à 8.

12. Véhicule selon la revendication 11, **caractérisé en ce que** le rail (8) est connecté à la porte coulissante.
